# EUROPEAN PATENT APPLICATION

(11) **EP 4 161 190 A1**
(43) Date of publication of application: **05.04.2023**
(21) Application number: 21813573.9
(22) Date of filing: 12.05.2021
(51) Int. Cl.: H04W 72/04, H04W 16/28

(54) **TERMINAL, WIRELESS COMMUNICATION METHOD, AND BASE STATION**

(30) Priority: 29.05.2020 JP 2020094109
(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/017963
(87) International publication number: WO 2021/241212

(57) **Abstract**

To suitably perform UL transmission after BFR. A terminal according to one aspect of the present disclosure includes: a reception section that receives a response to a report of a candidate beam in a beam failure recovery (BFR) procedure of a secondary cell; and a control section that assumes that a sounding reference signal (SRS) resource is transmitted in a specific cell by using a spatial domain filter related to the reported candidate beam after a period from a last symbol of reception of the response.

## Description

### Technical Field

The present disclosure relates to a terminal, a radio communication method, and a base station in next-generation mobile communication systems.

### Background Art

In a universal mobile telecommunications system (UMTS) network, Long Term Evolution (LTE) has been specified for the purpose of further high-speed data rate, low latency, and the like (see Non Patent Literature 1). In addition, LTE-Advanced (third generation partnership project (3GPP) Release (Rel.) 10 to 14) has been specified for the purpose of further larger capacity and advancement of LTE (3GPP Rel. 8 and 9) .

Successor systems to LTE (for example, also referred to as 5th generation mobile communication system (5G), 5G+ (plus), 6th generation mobile communication system (6G), New Radio (NR), or 3GPP Rel. 15 or later) are also under study.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)" April 2010

### Summary of Invention

### Technical Problem

In the NR, it has been studied to perform a procedure for a user terminal (or user equipment (UE)) to detect a beam failure (BF) and switch to another beam (which may also be referred to as a beam failure recovery (BFR) procedure, BFR, and the like).

In Rel. 15 BFR, it is specified that a QCL assumption of a specific PDCCH and a spatial relation of a specific PUCCH are updated based on a new candidate beam until an explicit beam is configured/activated after completion of an RA procedure for BFR (it may be referred to as after BFR, after BFR completion, or the like). As a result, it is possible to avoid a situation in which a failed beam is continuously used and appropriate communication cannot be performed.

However, regarding BFR for a secondary cell studied in Rel. 16 NR, update of a spatial relation (beam) for a UL channel/signal after the BFR has not yet been studied. If the spatial relation is not appropriately applied, throughput, communication quality, and the like may be degradated.

Therefore, anobject of the present disclosure is to provide a terminal, a radio communication method, and a base station capable of properly performing UL transmission after BFR.

### Solution to Problem

A terminal according to one aspect of the present disclosure includes: a reception section that receives a response to a report of a candidate beam in a beam failure recovery (BFR) procedure of a secondary cell; and a control section that assumes that a sounding reference signal (SRS) resource is transmitted in a specific cell by using a spatial domain filter related to the reported candidate beam after a period from a last symbol of reception of the response.

### Advantageous Effects of Invention

According to one aspect of the present disclosure, UL transmission can be suitably performed after BFR.

### Brief Description of Drawings

Fig. 1 is a diagram illustrating an example of a beam recovery procedure in Rel. 15 NR.
Fig. 2 is a diagram illustrating an example of a beam recovery procedure in Rel. 16 NR.
Fig. 3 is a diagram illustrating an example of spatial relation update after SCell BFR according to one embodiment.
Fig. 4 is a diagram illustrating an example of a schematic configuration of a radio communication system according to one embodiment.
Fig. 5 is a diagram illustrating an example of a configuration of a base station according to one embodiment.
Fig. 6 is a diagram illustrating an example of a configuration of a user terminal according to one embodiment.
Fig. 7 is a diagram illustrating an example of a hardware configuration of the base station and the user terminal according to one embodiment.

### Description of Embodiments

### (Beam Failure Recovery)

In NR, communication using beam forming has been studied. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, degradation of radio link quality is assumed because it becomes susceptible to interference by obstacles. A radio link failure (RLF) may frequently occur due to degradation of the radio link quality. When the RLF occurs, cell reconnection is required, and thus frequent occurrence of the RLF leads to degradation of system throughput.

In the NR, to suppress the occurrence of the RLF, it has been studied to perform a procedure of switching to another beam (which may also be referred to as beam recovery (BR), beam failure recovery (BFR), Layer 1/Layer 2 (L1/L2) beam recovery, or the like) in a case where quality of a specific beam degrades. Note that, the BFR procedure may be simply referred to as BFR.

Note that a beam failure (BF) in the present disclosure may be referred to as a link failure, a radio link failure (RLF).

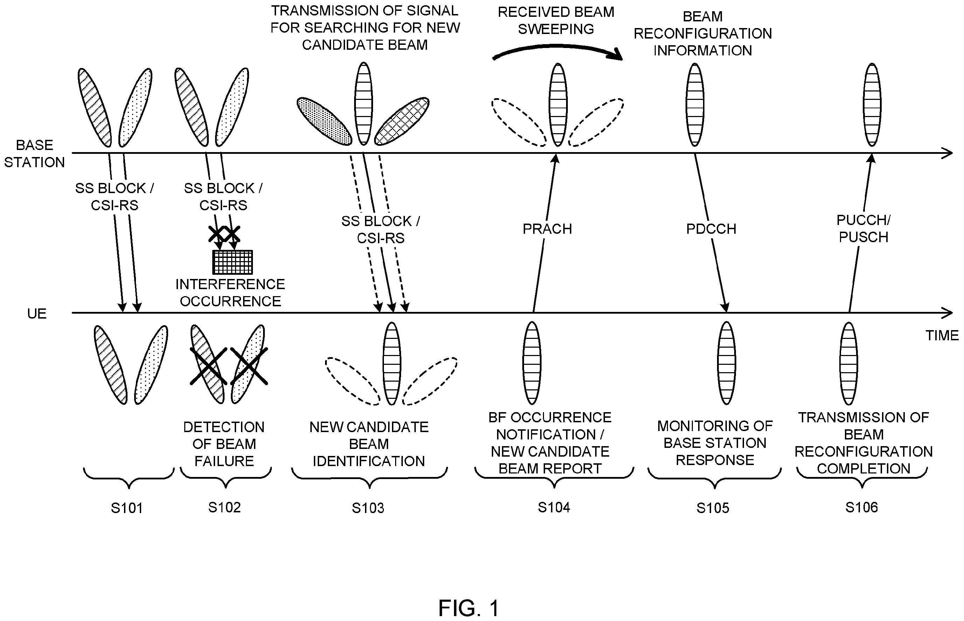

Fig. 1 is a diagram illustrating an example of a beam recovery procedure in Rel. 15 NR. The number of beams, or the like, is an example, and is not limited thereto. In an initial state (step S101) in Fig. 1, the UE performs measurement based on a reference signal (RS) resource transmitted using two beams.

The RS may be at least one of a synchronization signal block (SSB) or a channel state information RS (CSI-RS). Note that an SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in step S101 may be referred to as an RS for beam failure detection (beam failure detection RS (BFD-RS)), or the like.

In step S102, interference in radio waves from the base station occurs, whereby the UE cannot detect the BFD-RS (or reception quality of the RS degrades). Such interference may occur due to, for example, an effect of an obstacles between the UE and the base station, fading, interference, or the like.

After a given condition is satisfied, the UE detects a beam failure. For example, the UE may detect occurrence of a beam failure in a case where, for all of the configured BFD-RS (BFD-RS resource configurations), a block error rate (BLER) is less than a threshold value. When the occurrence of the beam failure is detected, a lower layer (physical (PHY) layer) of the UE may perform notification (indication) of a beam failure instance to a higher layer (MAC layer).

Note that criteria for determination is not limited to the BLER, and may be reference signal received power in a physical layer (Layer 1 reference signal received power (L1-RSRP)). Further, instead of RS measurement or in addition to RS measurement, beam failure detection may be performed on the basis of a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, in a case where one signal/channel and another signal/channel have a QCL relation, this may mean that it is possible to assume that these multiple different signals/channels have at least one identical property out of a Doppler shift, a Doppler spread, an average delay, a delay spread, or a spatial parameter (for example, spatial Rx filter/parameter, spatial Tx (transmission) filter/parameter) (a QCL relation is established regarding at least one of these).

Note that the spatial Rx parameter may correspond to a reception beam of the UE (for example, a reception analog beam), and the beam may be specified based on spatial QCL. The QCL (or at least one element of the QCL) in the present disclosure may be replaced with the spatial QCL (sQCL) .

Information regarding the BFD-RS (for example, an RS index, resource, number, number of ports, precoding, or the like), information regarding beam failure detection (BFD) (for example, the above-described threshold value), or the like may be configured in (notified to) the UE by using higher layer signaling, or the like. The information regarding the BFD-RS may also be referred to as information regarding a resource for BFR, or the like.

In the present disclosure, the higher layer signaling may be any of, for example, radio resource control (RRC) signaling, medium access control (MAC) signaling, broadcast information, and the like, or a combination thereof.

For example, a MAC control element (CE), a MAC protocol data unit (PDU), or the like may be used for the MAC signaling. The broadcast information may be, for example, a master information block (MIB), a system information block (SIB), remaining minimum system information (RMSI), other system information (OSI), and the like.

The MAC layer of the UE may start a given timer (which may also be referred to as a beam failure detection timer) in a case where a beam failure instance notification is received from the PHY layer of the UE. The MAC layer of the UE may trigger BFR (for example, start any one of random access procedures to be described later) after receiving the beam failure instance notification a certain number of times (for example, beamFailureInstanceMaxCount configured by RRC) or more before the timer expires.

The base station may determine that the UE has detected a beam failure in a case where there is no notification from the UE (for example, time for which there is no notification exceeds a given time) or in a case where a given signal (beam recovery request in step S104) is received from the UE.

In step S103, for beam recovery, UE starts a search for a new candidate beam to be newly used for communication. The UE may measure a given RS to select a new candidate beam corresponding to the RS. The RS measured in step S103 may be referred to as a new candidate beam identification RS (NCBI-RS), a CBI-RS, a candidate beam RS (CB-RS), or the like. The NCBI-RS may be the same as or different from the BFD-RS. Note that the new candidate beam may be referred to as a new candidate beam, a candidate beam, or a new beam.

The UE may determine a beam corresponding to an RS that satisfies a given condition as a new candidate beam. The UE may determine a new candidate beam on the basis of, for example, an RS whose L1-RSRP exceeds a threshold value among configured NCBI-RSs. Note that criteria for determination is not limited to L1-RSRP. The determination may be made using at least any one of L1-RSRP, L1-RSRQ, or L1-SINR (signal to noise interference power ratio). L1-RSRP regarding an SSB may also be referred to as SS-RSRP. L1-RSRP regarding a CSI-RS may also be referred to as CSI-RSRP. Similarly, L1-RSRQ regarding an SSB may also be referred to as SS-RSRQ. L1-RSRQ regarding a CSI-RS may also be referred to as CSI-RSRQ. Further, similarly, L1-SINR regarding an SSB may be referred to as SS-SINR. L1-SINR regarding a CSI-RS may be referred to as CSI-SINR.

Information regarding an NCBI-RS (for example, an RS resource, number, number of ports, precoding, or the like), information regarding new candidate beam identification (NCBI) (for example, the above-described threshold value), or the like may be configured in (notified) the UE using higher layer signaling, or the like. The information regarding the NCBI-RS may be acquired on the basis of the information regarding the BFD-RS. The information regarding the NCBI-RS may also be referred to as information regarding a resource for NCBI, or the like.

Note that the BFD-RS, NCBI-RS, or the like may be replaced with a radio link monitoring reference signal (RLM-RS).

In step S104, the UE that has specified the new candidate beam transmits a beam recovery request (Beam Failure Recovery reQuest (BFRQ)). A beam failure recovery request may also be referred to as a beam recovery request signal, a beam failure recovery request signal, or the like.

The BFRQ may be transmitted using, for example, a physical random access channel (PRACH). The BFRQ may include information on the new candidate beam specified in step S103. A resource for the BFRQ may be associated with the new candidate beam. Notification of the information on the beam may be performed using, for example, a beam index (BI), a port index of a given reference signal, a resource index (for example, CSI-RS resource indicator (CRI), SSB resource indicator (SSBRI)), or the like.

In Rel. 15 NR, contention-based BFR (CB-BFR) that is BFR based on a contention-based random access (CBRA) procedure and contention-free BFR (CF-BFR) (CF-BFR) that is BFR based on a contention-free based random access (CFRA) procedure are supported. In the CB-BFR and the CF-BFR, the UE may transmit a preamble (which is also referred to as an RA preamble, a physical random access channel (PRACH), an RACH preamble, or the like) as the BFRQ by using a PRACH resource.

Note that CF-BFR may also be referred to as CFRA BFR. CB-BFR may also be referred to as CBRA BFR.

In step S105, the base station that has detected the BFRQ transmits a response signal (which may also be referred to as a "BFR response", "gNB response" or the like) for the BFRQ from the UE. The response signal may include reconfiguration information (for example, DL-RS resource configuration information) for one or a plurality of beams.

The response signal may be transmitted, for example, in a UE common search space of a PDCCH. Notification of the response signal may be performed using a PDCCH (DCI) with a cyclic redundancy check (CRC) scrambled by an identifier (for example, a Cell Radio Network Temporary Identifier (C-RNTI)) of the UE. The UE may determine at least one of a transmission beam or a reception beam to be used, on the basis of beam reconfiguration information.

The UE may monitor the response signal on the basis of at least either a control resource set (CORESET) for BFR or a search space set for BFR. For example, the UE may detect the DCI with the CRC scrambled with the C-RNTI in the BFR search space in a CORESET individually configured.

For the CB-BFR, contention resolution may be determined to be successful in a case where the UE receives a PDCCH corresponding to the C-RNTI regarding the UE itself.

Regarding the processing in step S105, a period may be set for the UE to monitor a response from the base station (for example, gNB) for the BFRQ. The period may also be referred to as, for example, a gNB response window, a gNB window, a beam recovery request response window, a BFRQ response window, or the like. The UE may retransmit the BFRQ in a case where no gNB response is detected within the window period.

In step S106, the UE may transmit a message indicating that beam reconfiguration is completed to the base station. The message may be transmitted on the PUCCH or PUSCH, for example.

In step S106, the UE may receive RRC signaling indicating a configuration of a transmission configuration indication (TCI) state used for the PDCCH, or may receive a MAC CE indicating activation of the configuration.

Beam recovery success (BR success) may represent a case where step S106 is reached, for example. On the other hand, beam recovery failure (BR failure) may correspond to, for example, a case where the number of times of BFRQ transmission has reached a given number, or a beam-failure-recovery-timer has expired.

Note that numbers of these steps are merely numbers for description, and a plurality of these steps may be combined, or the order of these steps may be changed. Further, whether or not to perform BFR may be configured in the UE by using higher layer signaling.

### (MAC CE-based BFR)

Meanwhile, in future radio communication systems (for example, Rel. 16 or later), it is studied to, when a beam failure is detected, use an uplink control channel (PUCCH) and MAC control information (MAC CE) to notify the occurrence of the beam failure and report information regarding the cell (or CC) where a beam failure is detected and information regarding a new candidate beam.

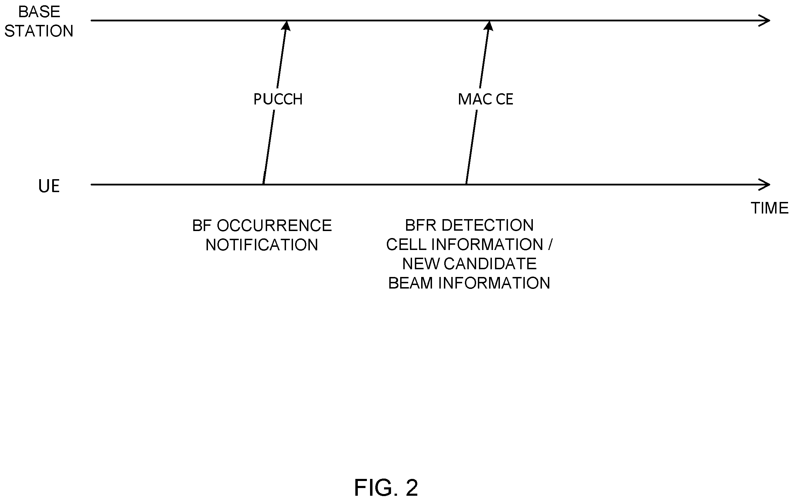

For example, it is conceivable that, after detecting a beam failure, the UE uses one or more steps (for example, two steps) to notify the occurrence of the beam failure and report information regarding the cell where a beam failure is detected and information regarding a new candidate beam (see Fig. 2). Note that the reporting operation is not limited to two steps.

A resource can be set more flexibly in a time domain for the uplink control channel as compared with the PRACH. For that reason, it is effective to use the uplink control channel (PUCCH) as a channel to be used for BFRQ transmission. Further, a resource can be set more flexibly in a time domain for the MAC CE (PUSCH) as compared with the PRACH. For that reason, it is also effective to use the MAC CE (PUSCH) as the channel to be used for the BFRQ transmission.

A BFR using reporting using an MAC CE like that shown in Fig. 2 may be referred to as MAC CE-based BFR, two-step BFR, Rel. 16 BFR, etc., or may be referred to as SCell BFR because the usage of recovering a beam failure of a secondary cell (SCell) is assumed.

Note that the BFR of Fig. 1 described above may be referred to as PRACH-based BFR, PRACH-based primary cell (PCell) BFR, Rel. 15 BFR, etc.

In Fig. 2, first, the UE detects the occurrence of a beam failure in a cell (for example, an SCell). This detection may be performed by a method similar to Rel. 15 BFR. In a first step (or step 1), the UE uses an uplink control channel (PUCCH) to notify the occurrence of a beam failure.

The UE that has detected the occurrence of a beam failure searches for a new candidate beam in the cell. The new candidate beam may be a beam corresponding to the RS satisfying the given condition described above. It is assumed that, in a second step (or step 2), the UE uses MAC control information (for example, an MAC CE or an MAC PDU including an MAC CE) to report at least one of information regarding the cell where a beam failure is detected and information regarding a new candidate beam.

In the following description, the information transmitted in a first step is also referred to as first information, and the information transmitted in a second step is as second information.

For the PUCCH in the first step, a method similar to that for transmission of a scheduling request (SR) may be used. For example, in a BFR procedure, the UE may transmit first information notifying the occurrence of a beam failure by using an SR. The SR used for notification of the occurrence of a beam failure may be referred to as an SR for BFR, an SR for SCell BFR, a dedicated SR for SCell, a dedicated SR, a link recovery request (LRR), etc.

The MAC CE (or the MAC PDU) in the second step may be transmitted by using an uplink resource. For example, the UE may transmit the MAC CE by using an uplink resource allocated from the base station by the transmission of a PUCCH (for example, a dedicated SR-like PUCCH) in the first step. The MAC CE may be referred to as a MAC CE for BFR, a BFR MAC CE, or the like.

The uplink resource may be replaced by a resource for a logical uplink channel (for example, an uplink shared channel (UL-SCH)) (UL-SCH resource), a resource for a physical uplink channel (for example, a physical uplink shared channel), or the like.

The format of the PUCCH used in the first step may be, for example, PUCCH format (PF) 0 or 1. Further, the PUCCH transmission in the first step may be performed in a given cell (for example, a primary cell (PCell), a primary secondary cell (PSCell), or another SCell in which BF is not detected). PF0 may be configured by one or two symbols. On the other hand, PF1 may be configured by four or more symbols.

The PUCCH resource for SCell BFR in the first step may be configured in common to all SCells included in a given group (for example, the same cell group). Further, in the case where the UE detects a beam failure and, before the PUCCH (or SR) transmission in the first step, receives a UL grant in a cell where an MAC CE for BFR can be transmitted, the UE may not perform the PUCCH transmission in the first step.

The MAC CE transmission (PUSCH transmission) in the second step may be performed in the above given cell (for example, PCell, PSCell, or another SCell).

Even when the UE has detected a beam failure, if the UE cannot specify a new candidate beam, the UE may include, in the MAC CE in the second step, information of the cell where a beam failure is detected, and may not include an index of a new candidate beam. The case where a new candidate beam cannot be specified may be, for example, a case where there is no reference signal having a received power (RSRP) of a given value or more.

After transmitting the BFR MAC CE, the UE receives the BFR response. The BFR response may correspond to DCI that schedules PUSCH transmission having the same HARQ process number as that used for transmission of the first PUSCH transmitting the BFR MAC CE and has a New Data Indicator (NDI) field value to be toggled (in other words, schedules new transmission).

In the PRACH-based BFR of Rel. 15, it is specified that a QCL assumption of a specific PDCCH and a spatial relation of a specific PUCCH are updated based on a new candidate beam until an explicit beam is configured/activated after completion of an RA procedure for BFR (it may be referred to as after BFR, after BFR completion, or the like). As a result, it is possible to avoid a situation in which a failed beam is continuously used and appropriate communication cannot be performed.

However, the update of the spatial relation (beam) for the UL channel/signal after the SCell BFR has not yet been studied. For example, it is not clear how to update the spatial relation of the sounding reference signal (SRS). If the spatial relation is not appropriately applied, throughput, communication quality, and the like may be degradated.

Therefore, the present inventors have conceived a method for suitably performing UL transmission after BFR.

Hereinafter, embodiments according to the present disclosure will be described in detail with reference to the drawings. The radio communication methods according to the embodiments may be applied alone or in combination.

In the present disclosure, "A/B" and "at least one of A and B" may be interchangeable.

### (Radio Communication Method)

In an embodiment of the present disclosure, for SCell(s) in which the beam failure (BF) has been detected, after 28 symbols from the last symbol of the PDCCH reception in the format of DCI that schedules PUSCH transmission having the same HARQ process number as that used for transmission of the first PUSCH transmitting the MAC CE for BFR and has a New Data Indicator (NDI) field value to be toggled, the UE may perform at least one of the following operations (1) to (3).
(1) The PDCCH in all CORESETs of the above SCell(s) indicated by the MAC CE is monitored using the same QCL parameter as an antenna port regarding an index q_{new}.
(2) The PUCCH is transmitted in the PUCCH-SCell using the same spatial domain filter as the periodic CSI-RS or SSB reception regarding the index q_{new} and using transmission power determined by applying qᵤ = 0, q_{d} = q_{new}, and 1 = 0 to a formula (Subclause 7.2.1 of TS 38.213) used for determining transmission power of the PUCCH (however, a case where three conditions that the PUCCH spatial relation information (PUCCH-SpatialRelationInfo) for the PUCCH is provided to the UE, the LRR is not transmitted in the PUCCH-SCell, and the PUCCH-SCell is included in the SCell(s) indicated by the MAC CE are satisfied).

Note that, in a normal case, qᵤ may be a PUCCH P0 ID (p0-PUCCH-Id) indicating the PUCCH P0 (P0-PUCCH) in the PUCCH P0 set (p0-Set). 1 may be referred to as an index of a power control adjustment state, a closed loop index, or the like. q_{d} may be an index (for example, set by PUCCH-PathlossReferenceRS) of the path loss reference RS.

In addition, q_{new} may be an index regarding a new candidate beam (for example, SSB/CSI-RS) reported by the UE to the network in the BFR procedure.

(3) An aperiodic SRS (A-SRS) resource is transmitted in a specific cell using the same spatial domain filter as the periodic CSI-RS or SSB reception regarding the index q_{new} and using the transmission power determined by applying q_{d} = q_{new} and 1 = 0 to a formula (Subclause 7.3.1 of TS 38.213) used to determine the transmission power of the SRS (however, in a case where the condition that the spatial relation information (spatialRelationInfo) for the A-SRS resource is provided to the UE is satisfied.).

The specific cell in the above (3) may be a cell corresponding to at least one of the following.
· SCell with the index q_{new} (in other words, a cell that receives the CSI-RS and SSB corresponding to the index q_{new}),
· SCell reported in the MAC CE for BFR that BF has been detected,
· All SCells in which the SCell BFR (or SCell beam failure detection) is configured,
· All SCells included in the PUCCH group (PUCCH cell group) to which the PUCCH-SCell of the above (2) belongs,
· All configured SCells,
· All active SCells, and
· All SCells to be configured/active in the intra-frequency band (or in the band) to which the SCell in which the SCell BFR has been implemented belongs.

For the PUCCH, only the PUCCH-SCell can transmit the PUCCH among the SCells in which the SCell BFR is used. On the other hand, since the SRS can be transmitted in any SCell, it is preferable to clarify a specific cell as described above.

The A-SRS resource of the above (3) may be an A-SRS resource included in an SRS resource set in which a usage of the higher layer parameter has been set to a specific usage. The specific usage may be, for example, at least one of a codebook, a non-codebook, antenna switching (antennaswitching), and beam management (beammanagement).

When the A-SRS resource in the above (3) corresponds to the SRS of the codebook/non-codebook usage, the UE can appropriately update the beam (spatial relation) of the PUSCH of the SCell in which BF has been detected to q_{new}. This is because the SRS of the codebook/non-codebook usage may be used for determining a precoder for codebook-based or non-codebook-based PUSCH transmission based on an SRS Resource Indicator (SRI) .

The UE may assume that the spatial relation is explicitly updated using the MAC CE for the A-SRS resource corresponding to a usage other than the specific usage.

Note that the subcarrier spacing (SCS) configuration for the 28 symbols may correspond to the minimum SCS configuration between the SCS configuration of the active downlink bandwidth part (DL BWP) for the PDCCH reception and the SCS configuration of the active DL BWP for the SCell(s) in which the beam failure has been detected.

The PUCCH/SRS transmission in the above (2) and (3) may mean transmission using the same spatial domain filter as the spatial domain reception filter for reception of the reference signal (for example, SSB or CSI-RS) corresponding to the index q_{new} (transmission to which the spatial domain filter corresponding to the new candidate beam has been applied). According to (2) and (3) described above, the spatial relation of the PUCCH/SRS can be updated to the spatial relation corresponding to the new candidate beam after 28 symbols from the BFR response.

The "PUCCH spatial relation information (PUCCH-SpatialRelationInfo) for the PUCCH is provided to the UE" in the above (2) may be replaced with "the default spatial relation is not applied to the PUCCH".

The "spatial relation information (spatialRelationInfo) for the A-SRS resource is provided to the UE" in the above (3) may be replaced with "the default spatial relation is not applied to the A-SRS resource".

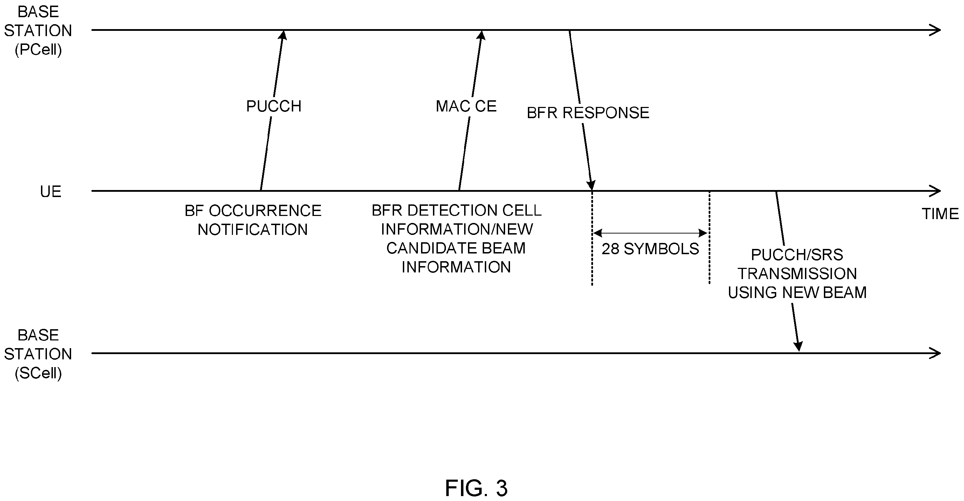

Fig. 3 is a diagram illustrating an example of spatial relation update after the SCell BFR according to one embodiment. In the present example, the UE performs transmission and reception for the SCell BFR related to BF detected in a certain SCell with respect to the PCell. In addition, the base station forming the PCell and the base station forming the SCell may be different or the same.

In the present example, after 28 symbols from the last symbol of PDCCH reception of (the DCI format of) the BFR response, the UE may assume that the beam for PUCCH/SRS transmission is the same as the new candidate beam (new beam) reported in the MAC CE (the same spatial domain filter as the periodic CSI-RS or SSB reception related to the index q_{new} is applied to the PUCCH/SRS transmission).

Note that the UE may assume that the above operations (1) to (3) are not performed until 28 symbols elapse from the last symbol of PDCCH reception of (the DCI format of) the BFR response.

According to one embodiment of the present disclosure described above, the beam recovered by the SCell BFR can be appropriately used for subsequent transmission of the PUCCH/SRS.

### <Others>

The "28 symbols" in the above embodiment may be replaced with "X symbols" (or a given number of symbols). X (given number) may be determined in advance by the specifications, may be set by the higher layer signaling or the like, or may be determined on the basis of the UE capability (for example, the UE capability related to the BFR).

In addition, "after 28 symbols" in the present disclosure may be replaced with "in a certain period after 28 symbols". The certain period may be, for example, a period until the spatial relation is configured/activated for the PUCCH/SRS.

Note that the above embodiment may be applied to the UE in which a specific parameter has been configured by RRC. The specific parameter may be, for example, a parameter that enables the BFR (or SCell BFR) of Rel. 16.

Note that the above embodiment may be applied to the UE that has reported specific capability information to the network. The capability information may be, for example, a capability regarding the QCL assumption/spatial relation after the SCell BFR. When the SCell BFR is performed, the UE that has reported the capability information may perform at least one operation of (1) to (3) described above after 28 symbols from the last symbol of the BFR response reception.

Note that the "A-SRS resource" in the above embodiment may be replaced with at least one of a periodic SRS (P-SRS)) resource, a semi-persistent SRS (SP-SRS) resource, and an A-SRS resource.

Note that the SCell in each of the above embodiments may be replaced with at least one of a special cell (SpCell) and the SCell. The SpCell may be replaced with the PCell/PSCell, or may mean a cell other than the PCell/PSCell.

### (Radio Communication System)

Hereinafter, a configuration of a radio communication system according to one embodiment of the present disclosure will be described. In the radio communication system, communication is performed by using one or a combination of the above-described radio communication methods according to the embodiment of the present disclosure.

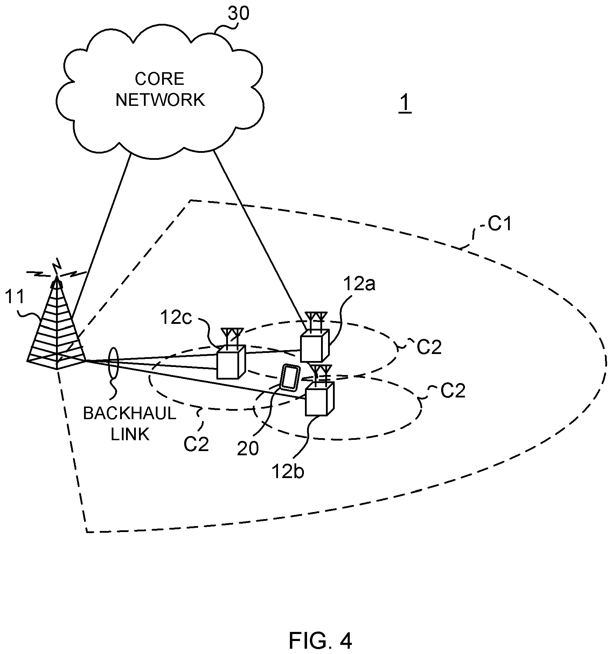

Fig. 4 is a diagram illustrating an example of a schematic configuration of a radio communication system according to one embodiment. A radio communication system 1 may be a system that implements communication using Long Term Evolution (LTE), 5th generation mobile communication system New Radio (5G NR), and the like specified by Third Generation Partnership Project (3GPP).

Further, the radio communication system 1 may support dual connectivity (multi-RAT dual connectivity (MR-DC)) among a plurality of pieces of radio access technology (RAT). The MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In EN-DC, an LTE (E-UTRA) base station (eNB) is a master node (MN), and an NR base station (gNB) is a secondary node (SN). In NE-DC, the NR base station (gNB) is MN, and an LTE (E-UTRA) base station (eNB) is SN.

The radio communication system 1 may support dual connectivity (for example, dual connectivity (NR-NR dual connectivity (NN-DC) in which both MN and SN are NR base stations (gNB)) between a plurality of base stations in the same RAT.

The radio communication system 1 may include a base station 11 that forms a macro cell C1 with a relatively wide coverage, and base stations 12 (12a to 12c) that are arranged within the macro cell C1 and that form a small cell C2 narrower than the macro cell C1. User terminal 20 may be located in at least one cell. The arrangement, number, and the like of cells and the user terminals 20 are not limited to the aspects illustrated in the drawings. The base stations 11 and 12 will be collectively referred to as base stations 10 unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that, the frequency ranges, definitions, and the like of FR1 and FR2 are not limited to these, and FR1 may be a frequency range higher than FR2, for example.

Further, the user terminal 20 may perform communication in each CC by using at least one of time division duplex (TDD) and frequency division duplex (FDD).

The plurality of base stations 10 may be connected by wire (for example, an optical fiber in compliance with common public radio interface (CPRI) or an X2 interface) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include at least one of, for example, at least one of evolved packet core (EPC), 5G core network (5GCN), and a next generation core (NGC), and the like.

The user terminal 20 may be a terminal corresponding to at least one of communication schemes such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method and another multi-carrier transmission method) may be used as UL and DL radio access method.

In the radio communication system 1 a physical downlink shared channel (PDSCH) shared by each user terminal 20, a physical broadcast channel (PBCH), a physical downlink control channel (PDCCH), and the like may be used as a downlink channel.

Further, in the radio communication system 1, an uplink shared channel (physical uplink shared channel (PUSCH)) shared by each user terminal 20, an uplink control channel (physical uplink control channel (PUCCH), a random access channel (physical random access channel (PRACH)), and the like may be used as an uplink channel.

User data, higher layer control information, and a system information block (SIB), and the like are transmitted by the PDSCH. The PUSCH may transmit the user data, higher layer control information, and the like. Further, a Master Information Block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that, the DCI that schedules the PDSCH may be referred to as DL assignment, DL DCI, and the like, and the DCI that schedules the PUSCH may be referred to as UL grant, UL DCI, and the like. Note that PDSCH may be replaced with DL data, and PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, and the like), scheduling request (SR), and the like may be transmitted by the PUCCH. A random access preamble for establishing a connection with a cell may be transmitted by the PRACH.

Note that, in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS and SSS) and PBCH (and DMRS for PBCH) may be referred to as an SS/PBCH block, an SS block (SSB), and the like. Note that SS, SSB, and the like may also be referred to as a reference signal.

Furthermore, in the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific reference signals)".

### (Base Station)

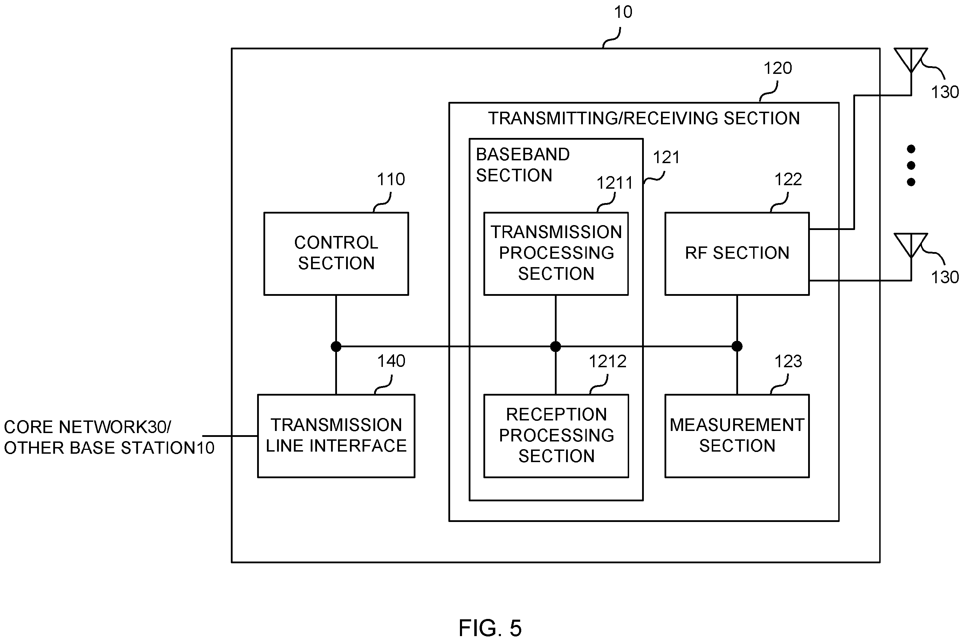

Fig. 5 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, the example mainly describes functional blocks of characteristic parts in the embodiment, and it may be assumed that the base station 10 also includes other functional blocks that are necessary for radio communication. A part of processing of each section described below may be omitted.

The control section 110 controls the entire base station 10. The control section 110 can include a controller, a control circuit, and the like, that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, and the like that are described on the basis of common recognition in the technical field related to the present disclosure.

The transmitting/receiving section 120 may be constituted as an integrated transmitting/receiving section, or may be configured by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can include an antenna on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency range, filtering processing, amplification, and the like on the base band signal, and may transmit a signal in the radio frequency band via the transmission/reception antenna 130.

Meanwhile, the transmitting/receiving section 120 (RF section 122) may perform amplification, filtering processing, demodulation to a base band signal, and the like on the signal in the radio frequency range received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus, another base stations 10, and the like included in the core network 30, and may perform acquisition, transmission, and the like of user data (user plane data), control plane data, and the like for the user terminal 20.

Note that, the transmitting section and the receiving section of the base station 10 in the present disclosure may be constituted by at least one of the transmitting/receiving section 120, the transmission/reception antenna 130, and the transmission line interface 140.

Note that the transmitting/receiving section 120 may transmit a response to the report of the candidate beam to the user terminal 20 in a beam failure recovery (BFR) procedure of the secondary cell.

The control section 110 may assume that the user terminal 20 transmits a sounding reference signal (SRS) resource in a specific cell by using a spatial domain filter related to the reported candidate beam after a period from a last symbol of reception of the response.

### (User Terminal)

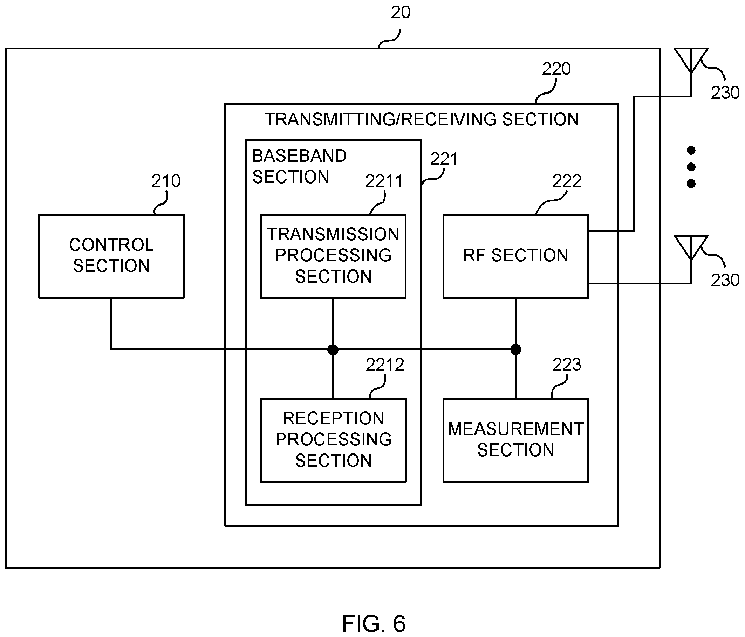

Fig. 6 is a diagram illustrating an example of a configuration of a user terminal according to one embodiment. The user terminal 20 includes a control section 210, a transmitting/receiving section 220, and a transmission/reception antenna 230. Note that, one or more each of the control sections 210, the transmitting/receiving sections 220, and the transmission/reception antennas 230 may be included.

Note that, the example mainly describes functional blocks of characteristic parts in the present embodiment, and it may be assumed that the user terminal 20 includes other functional blocks necessary for radio communication. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmission section/reception section, an RF circuit, a baseband circuit, a filter, a phase shifter, a measurement circuit, a transmitting/receiving circuit, and the like that are described on the basis of common recognition in the technical field related to the present disclosure.

The transmitting/receiving section 220 may be formed as an integrated transmitting/receiving section, or may be constituted by a transmitting section and a receiving section. The transmitting section may be constituted by the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be based on configuration of transform precoding. When the transform precoding is enabled for a channel (for example, PUSCH), the transmitting/receiving section 220 (transmission processing section 2211) may perform DFT processing as the transmission processing in order to transmit the channel by using a DFT-s-OFDM waveform. When it is not the case, DFT processing may not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220, the transmission/reception antenna 230, and the transmission line interface 240.

Note that, in the beam failure recovery (BFR) procedure of the secondary cell, the transmitting/receiving section 220 may receive a response ((PDCCH related to) BFR response) to the report (for example, BFR MAC CE) of the candidate beam.

The control section 210 may assume that a sounding reference signal (SRS) resource is transmitted in a specific cell by using a spatial domain filter related to the reported candidate beam after a period from a last symbol of reception of the response. The period may be, for example, 28 symbols, X symbols, or the like. The SRS resource may be an A-/SP-/P-SRS resource.

The specific cell may be a secondary cell in which the candidate beam is transmitted.

The specific cell may be all secondary cells included in a cell group (PUCCH group) to which a secondary cell (PUCCH-SCell) in which an uplink control channel (PUCCH) is transmitted by using a spatial domain filter related to the reported candidate beam after a period from a last symbol of reception of the response belongs.

The SRS resource may be an SRS resource included in an SRS resource set whose usage is set to a codebook or a non-codebook.

### (Hardware Configuration)

Note that the block diagrams that have been used to describe the above embodiments illustrate blocks in functional units. These functional blocks (configuration sections) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio and the like, for example) and using these plural apparatuses. The functional block may be achieved by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (configuration section) that causes transmission to function may be called as a transmitting unit, a transmitter, and the like. In any case, as described above, the implementation method is not particularly limited.

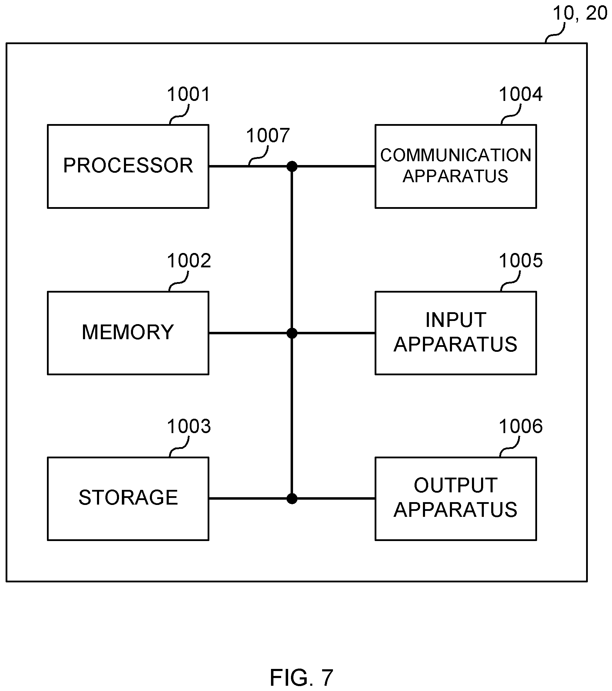

For example, a base station, a user terminal, and the like according to one embodiment of the present disclosure may function as a computer that executes the processing of the radio communication method of the present disclosure. Fig. 7 is a diagram illustrating an example of the hardware configuration of the base station and the user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that in the present disclosure, the words such as an apparatus, a circuit, a device, a section, and a unit can be replaced with each other. The hardware configuration of the base station 10 and the user terminal 20 may be designed to include one or a plurality of each apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) on hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be include a central processing unit (CPU) including an interface with peripheral equipment, a control apparatus, an arithmetic apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, or data, from at least one of the storage 1003 and the communication apparatus 1004 into the memory 1002, and executes various kinds of processing according to these. As the program, a program to cause a computer to execute at least a part of the operation described in the above-described embodiment is used. For example, the control section 110 (210) may be implemented by a control programs that is stored in the memory 1002 and operates in the processor 1001, and another functional block may be implemented similarly.

The memory 1002 is a computer-readable recording medium, and may be constituted with, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store executable programs (program codes), software modules, and the like for implementing the radio communication method according to one embodiment of the present disclosure.

The storage 1003 is a computer-readable recording medium, and may be constituted with,, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, and other appropriate storage media. The storage 1003 may be referred to as "secondary storage apparatus".

The communication apparatus 1004 is hardware (transmitting/receiving device) for allowing inter-computer communication via at least one of wired and wireless networks, and may be referred to as, for example, a network device, a network controller, a network card, a communication module, and the like. The communication apparatus 1004 may be configured to include a high frequency switch, a duplexer, a filter, a frequency synthesizer, and tso on in order torealize, for example, at least one of frequency division duplex (FDD) and time division duplex (TDD). For example, the above-described transmitting/receiving section 120 (220), the transmission/reception antenna 130 (230), and so on may be implemented by the communication apparatus 1004. In the above-described transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an application specific integrated circuit (ASIC), a programmable logic device (PLD), or a field programmable gate array (FPGA), and so on, and part or all of the functional blocks may be implemented by using the hardware. For example, the processor 1001 may be implemented with at least one of these pieces of hardware.

### (Variations)

Note that the terminology described in the present disclosure and the terminology that is needed to understand the present disclosure may be replaced by other terms that have the same or similar meanings. For example, a channel, a symbol, and a signal (signal or signaling) may be interchangeably interpreted. Also, "signals" may be a message. A reference signal may be abbreviated as an RS, and may be referred to as a pilot, a pilot signal, and so on, depending on which standard applies. Furthermore, a component carrier (CC) may be referred to as a cell, a frequency carrier, a carrier frequency, and so on.

A radio frame may be constituted of one or a plurality of periods (frames) in the time domain. Each of the one or a plurality of periods (frames) constituting a radio frame may be referred to as a subframe. Furthermore, the subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a specific windowing processing performed by a transceiver in the time domain, and the like.

A slot may be constituted of one or a plurality of symbols in the time domain (orthogonal frequency division multiplexing (OFDM) symbols, single carrier frequency division multiple access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot, " a "mini-slot, " and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like) , or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like) . In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2020-094109 filed on May 29, 2020. The contents of this are all incorporated herein.

## Claims

1. A terminal comprising:
a reception section that receives a response to a report of a candidate beam in a beam failure recovery (BFR) procedure of a secondary cell; and
a control section that assumes that a sounding reference signal (SRS) resource is transmitted in a specific cell by using a spatial domain filter related to the reported candidate beam after a period from a last symbol of reception of the response.

2. The terminal according to claim 1, wherein the specific cell is a secondary cell in which the candidate beam is transmitted.

3. The terminal according to claim 1, wherein the specific cell is all secondary cells included in a cell group to which a secondary cell in which an uplink control channel is transmitted by using a spatial domain filter related to the reported candidate beam after a period from a last symbol of reception of the response belongs.

4. The terminal according to any one of claims 1 to 3, wherein the SRS resource is an SRS resource included in an SRS resource set whose usage is set to a codebook or a non-codebook.

5. A radio communication method for a terminal, comprising the steps of:
receiving a response to a report of a candidate beam in a beam failure recovery (BFR) procedure of a secondary cell; and
assuming that a sounding reference signal (SRS) resource is transmitted in a specific cell by using a spatial domain filter related to the reported candidate beam after a period from a last symbol of reception of the response.

6. A base station comprising:
a transmission section that transmits, to a terminal, a response to a report of a candidate beam in a beam failure recovery (BFR) procedure of a secondary cell; and
a control section that assumes that the terminal transmits a sounding reference signal (SRS) resource in a specific cell by using a spatial domain filter related to the reported candidate beam after a period from a last symbol of reception of the response.
